# EUROPEAN PATENT SPECIFICATION

(11) **EP 4 222 891 B1**
(45) Date of publication and mention of the grant of the patent: **29.01.2025**
(21) Application number: 21786451.1
(22) Date of filing: 01.10.2021
(51) Int. Cl.: H04B 10/11, H04B 10/25, H04B 10/70

(54) **METHODS AND APPARATUS FOR COHERENT SIGNAL TRANSMISSION**
VERFAHREN UND VORRICHTUNG ZUR KOHÄRENTEN SIGNALÜBERTRAGUNG
PROCÉDÉ ET APPAREIL DE TRANSMISSION DE SIGNAL COHÉRENTE

(30) Priority: 02.10.2020 GB 202015681
(43) Date of publication of application: 09.08.2023
(73) Proprietor: University of York, York, Yorkshire YO10 5DD (GB)
(72) Inventor: SUBRAMANIAN, Rupesh Kumar Parapatil, Heslington, York Yorkshire YO10 5DD (GB); SPILLER, Timothy Paul, Heslington, York Yorkshire YO10 5DD (GB)
(74) Representative: Marks & Clerk LLP
(86) International application number: PCT/EP2021/077117
(87) International publication number: WO 2022/069716

(56) References cited:
- WU HAO ET AL: "Coherent communication experiment based on 7-core fiber", 2017 16TH INTERNATIONAL CONFERENCE ON OPTICAL COMMUNICATIONS AND NETWORKS (ICOCN), IEEE, 7 August 2017 (2017-08-07), pages 1 - 3, XP033270348, ISBN: 978-1-5386-3271-0, [retrieved on 20171127], DOI: 10.1109/ICOCN.2017.8121585
- GABDULKHAKOV ILDARIS M: "Multi-channel system of quantum key distribution with frequency coding based on the AMPM-PMAM electro-optical scheme", SPIE PROCEEDINGS; [PROCEEDINGS OF SPIE ISSN 0277-786X], SPIE, US, vol. 11516, 22 May 2020 (2020-05-22), pages 115161W - 115161W, XP060131908, ISBN: 978-1-5106-3673-6, DOI: 10.1117/12.2570506
- KUMAR RUPESH ET AL: "Feasibility of higher key rate continuous variable quantum key distribution with multi-mode signals", 2020 22ND INTERNATIONAL CONFERENCE ON TRANSPARENT OPTICAL NETWORKS (ICTON), IEEE, 19 July 2020 (2020-07-19), pages 1 - 4, XP033828861, DOI: 10.1109/ICTON51198.2020.9203028
- RUPESH KUMAR ET AL: "Continuous variable quantum key distribution with multi-mode signals for noisy detectors", ARXIV.ORG, CORNELL UNIVERSITY LIBRARY, 201 OLIN LIBRARY CORNELL UNIVERSITY ITHACA, NY 14853, 15 July 2019 (2019-07-15), XP081442109
- CHU BINJIE ET AL: "Crosstalk-induced Impact of Coexisting DWDM Network on Continuous-variable QKD", 2020 16TH INTERNATIONAL CONFERENCE ON THE DESIGN OF RELIABLE COMMUNICATION NETWORKS DRCN 2020, IEEE, 25 March 2020 (2020-03-25), pages 1 - 5, XP033769742, DOI: 10.1109/DRCN48652.2020.1570604589
- MENDINUETA JOSE MANUEL DELGADO ET AL: "Digital signal processing techniques for multi-core fiber transmission using self-homodyne detection schemes", 2014 22ND EUROPEAN SIGNAL PROCESSING CONFERENCE (EUSIPCO), EURASIP, 1 September 2014 (2014-09-01), pages 1880 - 1884, XP032682045
- CHAI GENG ET AL: "Analysis of Atmospheric Continuous-Variable Quantum Key Distribution with Diverse Modulations", INTERNATIONAL JOURNAL OF THEORETICAL PHYSICS, PLENUM PRESS, NEW YORK, NY, US, vol. 58, no. 11, 27 August 2019 (2019-08-27), pages 3746 - 3764, XP036943459, ISSN: 0020-7748, [retrieved on 20190827], DOI: 10.1007/S10773-019-04245-X

## Description

### FIELD OF THE INVENTION

The present invention relates to a transmission system for transmitting signals encoding quantum keys, and to a communication system incorporating such a transmission system. It further relates to the methods performed by the transmission system and the communication system.

### BACKGROUND OF THE INVENTION

There are two basic types of QKD:
(1) Discrete variable (DV) QKD, which is based on single photon generation and detection; and
(2) Continuous Variable (CV) QKD. This is based on comparatively higher light intensity, and is closely related to classical coherent communication, in which the data is transmitted over amplitude- and phase-modulated optical signals. In quantum coherent communication, the intensity of the signal is highly attenuated such that it exhibits quantum features in its amplitude and phase, e.g. vacuum noise and uncertainty induced by it. CVQKD exploits these features for secure key generation.

CVQKD has a number of advantages over DVQKD, especially for secure keys in highly noisy environments, for example transmission through a noisy communication fibre; and free-space communication in daylight. Both of these environments are challenging for DVQKD.

However, DVQKD can achieve longer transmission distances - both along fibre communication paths and along free-space communication paths. The limiting factor in operating CVQKD over longer distances of CVQKD is its inherently low signal-to-noise ratio, which makes key extraction from the quantum signal much more difficult beyond a certain level of loss. Accordingly, most research in QKD is currently dominated by DVQKD, and this has long been the case.

Coherent signals are widely used as data carriers in high-speed classical communications. In such communications, information may be encoded on the amplitude and phase (or, equivalently, the 'quadratures', i.e. the real and imaginary parts *x̂* and *p̂* of the complex amplitude *α* of a coherent beam) of the signal.

In recent decades quantum key distribution (QKD) has been proposed as a secure communication method which enables two parties ("users") at respective ends of one or more communication paths, to produce a shared random secret key known only to them, which can then be used to encrypt and decrypt messages passed between them. Each user is provided with a system ("transmission system") for sending data signals on at least one of the communication path(s), and a system ("receiver system") for extracting data from the data signals sent by the other user. The data signals are coherent signals attenuated down to the quantum level.

The keys generated by QKD are "unconditionally secure" in the sense that the encryption of the messages provides an unbreakable secure communication link between the users, since the messages cannot be decrypted without the secret key. "Unbreakable" is used here in the sense that the security of the QKD and the data encrypted by the key, whether it is in transit or before or after transmission, cannot be broken by future computers, however powerful. This includes quantum computers currently under development, which are expected to be able to break any cryptographic system based on mathematical complexity.

GABDULKHAKOV ILDARIS M: "Multi-channel system of quantum key distribution with frequency coding based on the AMPM-PMAM electrooptical scheme", SPIE PROCEEDINGS; [PROCEEDINGS OF SPIE ISSN 0277-786X], SPIE, US, vol. 11516, 22 May 2020 (2020-05-22), pages 115161W-115161W, XP060131908, DOI: 10.1117/12.2570506, ISBN: 978-1-5106-3673-6 discloses a multi-channel system of quantum key distribution with frequency coding based on the AMPM-PMAM electrooptical scheme, using a Comb generator, multiplexer and demultiplexer to form a set of parallel quantum subchannels.

KUMAR RUPESH ET AL: "Feasibility of higher key rate continuous variable quantum key distribution with multi-mode signals", 2020 22ND INTERNATIONAL CONFERENCE ON TRANSPARENT OPTICAL NETWORKS (ICTON), IEEE, 19 July 2020 (2020-07-19), pages 1-4, XP033828861, DOI: 10.1109/ICTON51198.2020.9203028 examines the feasibility of multi-mode Gaussian modulated continuous variable quantum key distribution (CV-QKD) systems for higher rate secure key generation at longer distances.

RUPESH KUMAR ET AL: "Continuous variable quantum key distribution with multi-mode signals for noisy detectors", ARXIV.ORG, CORNELL UNIVERSITY LIBRARY, 201 OLIN LIBRARY CORNELL UNIVERSITY ITHACA, NY 14853, 15 July 2019 (2019-07-15), XP081442109 proposes a multi-mode Gaussian modulated continuous variable quantum key distribution (CV-QKD) scheme able to operate at high bandwidth despite using conventional noisy, coherent detectors.

### SUMMARY OF INVENTION

The present invention aims to provide a new and useful transmitter system for transmitting data using electromagnetic signals, and a method for encoding data in the electromagnetic data signals.

The present invention proposes in general terms that multiple electromagnetic signal modes are generated having different respective frequencies, and each is split into a respective "weak" signal portion and a respective "strong" reference portion. The signal portions are subject to amplitude and phase modulation to encode data, and then the modulated signal portions are transmitted to a receiver system. The reference portions are transmitted to the receiver system separately also. The receiver system can decode the data by simultaneously measuring the modulated signal portions. The reference portion can be used for measuring the signal portions, or the signal portions can be measured independently for extracting the phase reference.

A transmitter system according to claim 1 and a corresponding method for transmitting according to claim 14 are provided.

The electromagnetic signal generator generates the at least two electromagnetic modes from a single laser source (that is, with a single laser cavity). The at least two electromagnetic modes may be generated using modulation of the single laser source. Alternatively, the single laser source may be a multi-frequency laser source. The multi-frequency laser source may comprise a laser cavity which supports multiple wavelength sidebands at a particular operating temperature. These wavelength sidebands (corresponding to the "at least two electromagnetic modes") may be 'single-frequency' sidebands having a bandwidth of 1nm or less. Alternatively, the multi-37462966-1 frequency laser source may comprise a wideband frequency laser having a bandwidth of a few nm (e.g. at least 2nm), and a demultiplexer and/or one or more wavelength filters. The demultiplexer and/or the one or more wavelength filters may be used to generate the at least two electromagnetic modes from a single pulse emitted by the wideband frequency laser.

The transmitter system may be part of a communication system which includes also a receiver system. Any receiver system can be used which is able to detect the multiple signal modes at once. For example, a fibre-based detector designed for single-mode signals can detect multi-mode signals. For free-space implementation the receiver described in WO 2020/183201 would be appropriate.

It is preferable that the multiple electromagnetic signal modes output by the beam-splitter (i.e. prior to the amplitude and phase modulation), have identical intensity. This means that the receiver system is able to extract amplitude and phase modulation data based on the quadrature value without individually measuring the signals prior to the modulation. By contrast, if the individual modes have different corresponding strengths, the receiver system has to perform a more complex measurement for each mode to estimate each electromagnetic signal mode quadrature. However, the transmitter system may be implemented with the multiple electromagnetic signal modes output by the beam-splitter having unequal intensity.

The transmitter system can be used with communication paths which are along one or more fibres or in free-space, or a combination of the two. For example, any one or more (or all) of the reference portions and/or the modulated signal portions of the electromagnetic signal modes can be transmitted along free-space communication paths, and any remaining reference portions and/or modulated signal portions can be transmitted along one or more waveguides, such as optical fibre(s). Alternatively, all the reference portions and/or the modulated signal portions may be transmitted along one or more waveguide(s), such as optical fibre(s). The reference portion(s) and/or modulated signal portion(s) which are transmitted along optical fibre(s) may all be transmitted on a single optical fibre, or different ones of the reference portions and/or the modulated signal portions may be transmitted along different corresponding optical fibres. In the case of multiple optical fibres, a plurality of the fibres may be integrated as a multi-core fibre.

It is known that after passing through a long-distance fibre, electromagnetic signals with significantly different wavelengths experience different wavelength dispersion, polarization changes, etc. which may require a dedicated control system for each wavelength. This would make the system more complex. However, this problem can be avoided by choosing the modes to differ in frequency by a smaller amount. In this case, dispersion and polarization changes are identical across the modes and therefore easy to control. This is more straightforward to arrange when the modes differ in frequency by small amounts if the electromagnetic modes are generated from a single laser source by modulation; that is, the modes can be chosen to cluster closely around a central wavelength which is the frequency of the single laser source.

### BRIEF DESCRIPTION OF DRAWINGS

An example of the invention will now be described with reference to the following drawings, in which:
Fig.1 shows the structure of a transmitter system in a first embodiment of the invention;
Fig. 2 shows schematically an array of three feeders for a free-space realization of the transmitter of Fig.1, and three receptors of a free-space receiver system; and
Fig. 3 shows the structure of a transmitter system in a second embodiment of the invention.

### DETAILED DESCRIPTION OF DRAWINGS

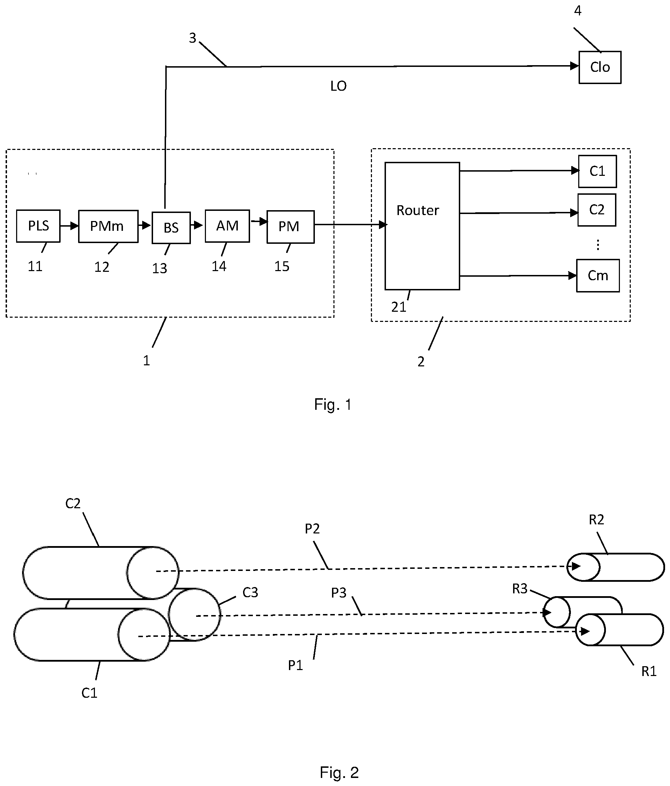

In Figure 1 a transmitter system is shown which is a first embodiment of the invention. This transmitter system is adapted for generating signals which are to be transmitted along free-space communication paths. However, with the changes described below, it is also suitable for generating systems which are transmitted along an optical fibre communication channel, or multiple optical fibre communication channels.

The transmitter system comprises a CVQKD multi-mode signal generator unit 1, and a transmitting unit 2. The signal generator unit 1 comprises an electromagnetic signal generator for generating multiple electromagnetic signals here referred to as "modes", and having different respective frequencies. In Fig.1 the electromagnetic signal generator is composed of a pulsed light source (PLS, typically a single laser) 11 which is internally or externally modulated to generate coherent pulses. PLS 11 is for generating an electromagnetic (e.g. visible light) signal having substantially a single frequency, i.e. an electromagnetic signal with a narrow spectrum having an intensity peak at a single central frequency, which we denote as *f_{c}*.

The electromagnetic signal generator further comprises first phase modulators 12 (also referred to as a "phase modulator for modes", PMm). PMm 12 is for generating, from the electromagnetic signal generated by PLS 11, an electromagnetic signal having intensity peaks at multiple respective frequencies. The electromagnetic signal may be considered as having components, each of which has substantially identical respective spectra - save that the frequency spectrum for each component is centred on a different mode of the frequencies. That is, the spectrum for each component is a (narrow) peak at a different mode of the frequencies. The multiple frequency components of the electromagnetic signal are referred to here as electromagnetic signal "modes". The number of such modes is denoted "m", where m is an integer greater than one. PMm 12 preferably creates multiple modes which are m sideband frequencies around the laser frequency *f_{c}*. Conveniently, as explained below, each of the modes has the same intensity. In one case, PMm 12 may modulate the single frequency signal generated by PLS 11 using frequencies f, 2f, 4f, etc. For example, the components may each have peak intensity at respective frequencies f_{c}, f_{c}-f, f_{c}+f, f_{c}+2f, f_{c}-2f, f_{c}-4f, f_{c}+4f,... That is, each of the modes may have a frequency which is equal to f_{c} plus or minus a basic modulation frequency f times 2 to the power of an integer.

In the first embodiment described above, the electromagnetic signal generator 1 generates the electromagnetic modes using modulation of the electromagnetic signal generated by the PLS 11.

The signal generator unit 1 further comprises a beam-splitter BS 13. BS 13 receives each of the electromagnetic signal modes (which may also be referred to as the "multi-moded signals pulse") and splits each of the electromagnetic signal modes into a respective signal portion and a respective reference portion. For each electromagnetic signal mode, the reference portion is "strong", i.e. it has a higher intensity than the "weak" signal portion.

The reference portions for all the modes (collectively denoted 3 in Fig.1) are passed to a channel feeder 4, which transmits them along a communication path (a free-space communication path or an optical fibre) to the receiver system. In the receiver system, the reference portions 3 are collectively intended to be used as a local oscillator ("LO"), so the channel feeder 4 is denoted Clo. It is also possible for the receiver system to use the LO 3 as a phase reference signal for Local Local Oscillator (LLO) for implementing CVQKD where the receiver system uses a separate laser (or lasers) for signal measurement.

The beam-splitter 13 transmits the respective signal portions of the electromagnetic signal modes to an encoder composed of an amplitude modulator (AM) 14 and a phase modulator unit 15. These units may optionally be in a different order from that shown in Fig.1.

Whereas a known single-mode CVQKD system modulates the amplitude and phase of a single-mode laser pulse in such a way that it carries information about the secure cryptographic key, by contrast in the encoder of Fig.1, the amplitude modulator unit 14 modulates the intensity of the multi-mode signals uniformly by applying a DC voltage across the pulse-width of the laser.

The phase modulator 15 modulates the modes at frequencies f, 2f, 4f, etc. with a different random phase delay for each of the modulation frequencies. The phase delay sets the relative phase between the signal mode and local oscillator. In other words, this phase delay is encoded as quadrature information on the signal, and the value of the quadratures carries the information for the secure key. For security, each of the signal modes is modulated to carry different, random quadrature information, to avoid redundancy. Note that the data is encoded collectively on the amplitude and phase (quadrature) of each signal mode; even though the amplitudes of the signal portions may be the same, their phases are different. Thus, different data is encoded in each signal portion. In a variant of the first embodiment, instead of or in addition to the phase modulator, an amplitude modulator is used to modulate each of the signal modes with a different random amplitude modulation. This modulation may be performed by the amplitude modulator unit 14, and/or by a separate amplitude modulator which is not illustrated.

Amplitude and phase modulation is performed for each mode of the multimode signals, which is equivalent to creating many random single-mode CVQKD signals.

It is preferable that the multiple electromagnetic signal modes output by the beam-splitter 13, prior to the amplitude and phase modulation performed by the units 14, and 15, have identical intensity. This means that the receiver system is able to extract amplitude and phase modulation data based on the quadrature value without individually measuring the signals prior to the modulation. By contrast, if the individual modes have different corresponding strengths, the receiver system has to perform a more complex measurement for each mode to estimate each signal mode quadrature. In a variant of the first embodiment, the multiple electromagnetic signal modes output by the beam-splitter 13, prior to the amplitude and phase modulation performed by the units 14 and 15, have unequal intensity.

Additionally, in order to estimate the noise parameter of the communication system, the quadrature strength (in terms of quadrature variance) after the modulation has to be quantified. If each signal mode has equal strength prior to amplitude and phase modulation, the variances of the modes after the modulations can straightforwardly be made identical. Setting the modes' strength to be identical at the input of the modulator makes the measurement of the modes' variances after the modulation easy.

Note that in another embodiment which is a variation of that in Fig. 1 and is not covered by the appended claims, the electromagnetic signal generator may alternatively be composed of multiple pulse light sources (lasers) arranged to generate light at different respective wavelengths generating sequential pulses. That is, each of the multiple frequency components of the electromagnetic signal is generated by a different respective laser of the multiple lasers. In this variant, the phase modulators 12 are not required, as the pulses from the multiple lasers are treated as the multiple modes. In this case, the phase modulator 15 individually modulates each wavelength pulse at a constant DC level.

The transmitting system further includes a transmitting unit 2 including a 1xm router 21, and a channel feeder unit which is a set of m channel feeders C1, C2, ....Cm.

The purpose of the router 21 is to direct the m multi-mode signals to respective ones of the channel feeders C1, C2, ....Cm of the channel feeder unit. The router 21 may be a 1xm beam-splitter, or a fast 1xm switch, or a 1xm wavelength splitter. Router 21 and 37462966-1 the multi-mode signal generator 1 may be synchronized using a control unit (processor).

The m channel feeders C1, C2, ....Cm send the respective outputs of the router 21 to a communication path which is a fibre-channel or a free-space channel.

In the case that the transmitter system is configured to send data signals along free-space communication paths, the feeder Clo couples the local oscillator from the multi-mode signal generator 1 to a communication path which is free-space channel, and the channel feeders C1, C2, ... Cm transmit the modulated signal portions of each electromagnetic signal mode at a communication path which is a respective free-space communication path. In this case, the channel feeders Clo, C1, C2, ....Cm may be collimators. Further, the receiver system may comprise respective collimators for receiving one or more of the signals.

Fig. 2 shows the channel feeders (collimators) C1, C2, C3 of a multi-mode collimated system for m=3 modes. The channel feeders C1, C2, C3 transmit signals along three respective parallel communication paths P1, P2, P3 to three respective signal receivers R1, R2, R3 of the receiver system. The receivers of the receiver system may be collimators. In one option, the receiver collimators are optical array telescopes.

In Fig. 2, no channel feeder (collimator) Clo and receiver for the local oscillator are shown. This is because the communication path for the local oscillator is implemented differently (e.g. using an optical fibre). However, in other embodiments, the local oscillator may be sent in same way as the signal modes. For example, the channel feeders C1, C2, C3 of Fig. 2 may be supplemented by a channel feeder (e.g. collimator) used to transmit the local oscillator, and the receiver may additionally comprise a receiver, such as a collimator, for receiving the local oscillator from the Clo over a free-space communication path, e.g. a communication path parallel to the communication paths P1, P2, P3.

Alternatively, in the case that the transmitter system (Fig. 1) is configured to send data signals along one or more corresponding fibre channels: the feeder Clo and the channel feeders C1, C2, ....Cm cooperate to do this such that the modulated signal portions of each electromagnetic signal mode are transmitted separately from the respective reference portions (that is, without interaction between the modulated signal portions and the respective reference portions). This may be done in the case of a single fibre channel, for example, in such a way that the local oscillator 3 (the set of respective reference portions) is transmitted with a first polarization, and the modulated signal portions are transmitted with a second polarization orthogonal to the first polarization. More generally, if multiple fibre channels are used with different ones of the reference portions and modulated signal portions being transmitted along corresponding ones of the fibre channels, each of the portions can be chosen to have a corresponding polarization such that, for each fibre channel, not all the portions transmitted along that fibre channel have the same polarization. Thus, interaction of the portions transmitted over the fibre channel is reduced compared to them all having the same polarization. Alternatively, if each of the reference portions and each of the modulated signal portions are transmitted along a respective at least one fibre channel (that is, each fibre channel is used to transmit only a single reference portion or a single modulated signal portion), the reference portions and modulated signal portions may be transmitted with any polarization.

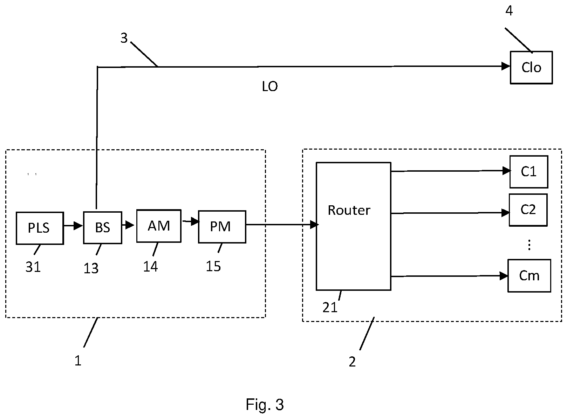

A second embodiment of the invention illustrated in Fig. 3 is variant of the first embodiment in which the PLS 11 and PMm 12 of the first embodiment are replaced by a multi-frequency laser source 31. Other elements of the second embodiment are as in the first embodiment and so are given the same respective reference numerals. The various forms of these components described in relation to Fig. 1 are can be employed in the second embodiment also. The multi-frequency laser source 31 may comprise a laser cavity which supports multiple wavelength sidebands at a particular operating temperature. These wavelength sidebands (corresponding to the electromagnetic modes) may be 'single-frequency' sidebands having a bandwidth of 1nm or less. Alternatively, the multi-frequency laser source may comprise a wideband frequency laser having a bandwidth of a few nm (e.g. at least 2nm), and a demultiplexer and/or one or more wavelength filters. The demultiplexer and/or the one or more wavelength filters may be used to generate the at least two electromagnetic modes from a single pulse emitted by the wideband frequency laser.

In principle, polarization drift might affect the separation of the signal modes from the LO signal, but the communication system preferably employs a polarization compensation technique to compensate for this. The channel feeders C1, C2, ....Cm may be implemented as fibre beam combiners or wavelength combiners. Each channel feeder can be configured to introduce a respective delay for the signal modes such that the signal modes reach the receiver unit at the same time. This delay is to compensate for the propagation delay of individual modes due to the channel. That is, the delays are selected to improve the uniformity of signal transmission instances according to a uniformity criterion. The delay is typically different for each signal mode. However, this depends upon the delay of communication path for each signal mode. In certain cases one or more of the delays may be the same. Optionally, the delay applied to a certain one (or more) of the signal modes may be zero, i.e. such that the other delays, corresponding to the other signal modes, are chosen to compensate for the propagation delays of the other signal models relative to the certain signal mode.

Note that the modulated signal portions of the electromagnetic modes are distinguishable from each other by their physical properties. For example, the sidebands produced by PMm 12 are distinguishable from each other by their wavelength compared to the central carrier wavelength *f_{c}*. As long as the different signals have distinguishable properties, the channel which carries each mode can be considered as a separate, individual channel for each mode, even if in practice multiple signals are sent along the same communication path (e.g. multiple modes are sent along the same optical fibre, or free-space communication paths which coincide).

The communication system further includes a receiver system for receiving the transmitted modulated signal portions of each electromagnetic signal mode and the transmitted set of respective reference portions (the local oscillator). The receiver system jointly measures the signals. Since the overall signal strength is scaled up with the number of modes, the signal-to-noise ratio at the receiver increases accordingly.

Note that when multiple signal modes are sent on the same channel, and all the modes are detected at the same instance, it is possible that one mode can cancel another if they have opposite quadrature values. Indeed, if the number of modes becomes very large the integration of the phase value over all the modes tends to a low value. But for a smaller number of modes this probability is negligible. Furthermore, the transmitter can avoid this risk completely, e.g. by arranging for no two signal modes to have the opposite phase. Since the system jointly measures all the signal modes simultaneously, the total signal strength is increased but the electronic noise from the detector remains the same as if there were only one mode. So the SNR of the joint measurement is higher than the conventional single mode case. The contribution of each mode to the final joint measurement SNR is higher than the SNR of a conventional single mode system.

Note that the electronic noise of the receiver system has a significant influence on the signal-to-noise ratio of the CVQKD systems. The transmitter system proposed here can be used as a multi-mode signal generator for CVQKD. For free-space implementation, the multi-mode signal receiver design proposed in WO 2020/183201 would be appropriate. With these systems, the signal-to-noise ratio increases substantially, and thus extends the transmission reach for secure key distribution with CVQKD. For example, to channels with 40dB (200km in fibre).

In conventional systems, error-correction in CVQKD transmission is normally limited due to the low signal-to noise ratio, which reduces the effectiveness of error correcting codes. Higher signal-to-noise ratios at longer distances enhances the performance of error-correction codes.

Conventional CVQKD systems work at a clock-rate of 1-100MHz. At a GHz rate the coherent detectors exhibit little or no sensitivity to quantum signals because the electronic noise of the detectors increases with clock-rate (bandwidth). By contrast, a multi-mode signal based CVQKD system enables the development of GHz clock-rate CVQKD systems which are unattainable in single mode systems due to high electronic noise of the receiver. A GHz clock-rate CVQKD system is relevant to both installed fibre networks and short lived optical links (e.g. satellite to ground).

## Claims

1. A transmitter system for transmitting data using electromagnetic data signals, the transmitter system comprising:
(i) an electromagnetic signal generator (1) operative to generate at least two electromagnetic signal modes having differing respective frequencies,
(ii) a beam-splitter (13) configured to receive each of the electromagnetic signal modes and splits each of the electromagnetic signal modes into a respective signal portion and a respective reference portion, and
(iii) an encoder (14, 15) configured to receive the respective signal portion of each electromagnetic signal mode and to encode data onto the signal portions by modulating each signal portion using phase and amplitude modulation; and
(iv) a transmitting unit (2) to transmit the modulated signal portions of each electromagnetic signal mode and the respective reference portions, to a receiver system along one or more communication paths,
and in which the signal generator (1) generates the at least two electromagnetic modes from a single laser source (11, 31),
and wherein the transmitter system is a multi-mode signal generator for continuous variable quantum key distribution.

2. A transmitter system according to claim 1 in which the signal portions of the electromagnetic signal modes generated by the beam-splitter (13) have equal signal intensity.

3. A transmitter system according to claim 1 or claim 2, in which the encoder (14, 15) applies a different random phase modulation to each signal portion of each electromagnetic signal mode.

4. A transmitter system according to any preceding claim, in which the encoder (14, 15) applies a different random amplitude modulation to each signal portion of each electromagnetic signal mode.

5. A transmitter system according to any of claims 1 to 4, in which the transmitting unit (2) is configured to transmit the reference portions to at least one optical fibre communication path with a first polarization, and the modulated signal portions to the at least one optical fibre communication path in a second polarization orthogonal to the first polarization.

6. A transmitter system according to any of claims 1 to 4, in which the transmitting unit (2) is configured to transmit the reference portions to at least one first optical fibre communication path, and the modulated signal portions to the at least one second optical fibre communication path, the at least one first optical fibre communication path being different from the at least second optical fibre communication path.

7. A transmitter system according to any of claims 1 to 4 in which the transmitting unit (2) is configured to transmit the modulated signal portions of each electromagnetic signal mode and the respective reference portions by free-space transmission.

8. A transmitter system according to claim 7 in which the transmitting unit (2) comprises respective collimators for the modulated signal portions of the electromagnetic signal modes.

9. A transmitter system according to claim 7 or claim 8 in which the transmitting unit (2) is configured to transmit the modulated signal portions of each electromagnetic signal mode and the respective reference portions with corresponding delays, the delays being selected to improve the uniformity of signal transmission instances.

10. A transmitter system according to any of claims 1 to 9, in which the signal generator (1) generates the at least two electromagnetic modes from the single laser source using modulation.

11. A transmitter system according to claim 10, in which the signal generator (1) generates the at least two electromagnetic modes from the single laser source (11, 31) using phase modulation.

12. A transmitter system according to any of claims 1 to 9, in which the single laser source (11, 31) is a multi-frequency laser source (31).

13. A communication system comprising a transmitter system according to any of claims 1 to 12 and a receiver system configured to receive the modulated signal portions of each electromagnetic signal mode and separately the respective reference portions, and to recover the encoded data.

14. A method for transmitting data using electromagnetic data signals, the method comprising, by a transmitter system for transmitting data using electromagnetic data signals:
(i) generating, from a single laser source, at least two electromagnetic signal modes having differing respective frequencies;
(ii) splitting the electromagnetic signal modes with beam-splitter (13) to generate, for each of the electromagnetic signal modes, a respective signal portion and a respective reference portion;
(ii) encoding data onto the signal portions by modulating each signal portion using at least one of phase and amplitude modulation; and
(iv) transmitting the modulated signal portions of each electromagnetic signal mode and separately the respective reference portions, to a receiving system along one or more communication paths,
wherein the transmitter system is a multi-mode signal generator for continuous variable quantum key distribution.

## Patentansprüche

1. Sendersystem zum Senden von Daten unter Verwendung elektromagnetischer Datensignale, wobei das Sendersystem Folgendes umfasst:
(i) einen elektromagnetischen Signalgenerator (1), der funktionsfähig ist, um mindestens zwei elektromagnetische Signalmodi mit unterschiedlichen jeweiligen Frequenzen zu erzeugen,
(ii) einen Strahlteiler (13), der konfiguriert ist, um jeden der elektromagnetischen Signalmodi zu empfangen und jeden der elektromagnetischen Signalmodi in einen jeweiligen Signalabschnitt und einen jeweiligen Referenzabschnitt aufzuteilen, und
(iii) einen Codierer (14, 15), der konfiguriert ist, um den jeweiligen Signalabschnitt jedes elektromagnetischen Signalmodus zu empfangen und Daten auf die Signalabschnitte zu codieren, indem jeder Signalabschnitt unter Verwendung von Phasen- und Amplitudenmodulation moduliert wird; und
(iv) eine Sendeeinheit (2), um die modulierten Signalabschnitte jedes elektromagnetischen Signalmodus und die jeweiligen Referenzabschnitte an ein Empfängersystem entlang eines oder mehrerer Kommunikationspfade zu senden,
und bei dem der Signalgenerator (1) die mindestens zwei elektromagnetischen Modi aus einer einzigen Laserquelle (11, 31) erzeugt,
und wobei das Sendersystem ein Multimodus-Signalgenerator für eine Quantenschlüsselverteilung mit kontinuierlichen Variablen ist.

2. Sendersystem nach Anspruch 1, bei dem die Signalabschnitte der durch den Strahlteiler (13) erzeugten elektromagnetischen Signalmodi eine gleiche Signalintensität aufweisen.

3. Sendersystem nach Anspruch 1 oder Anspruch 2, bei dem der Codierer (14, 15) auf jeden Signalabschnitt jedes elektromagnetischen Signalmodus eine unterschiedliche Zufallsphasenmodulation anwendet.

4. Sendersystem nach einem der vorhergehenden Ansprüche, bei dem der Codierer (14, 15) auf jeden Signalabschnitt jedes elektromagnetischen Signalmodus eine unterschiedliche Zufallsamplitudenmodulation anwendet.

5. Sendersystem nach einem der Ansprüche 1 bis 4, bei dem die Sendeeinheit (2) konfiguriert ist, um die Referenzabschnitte an mindestens einen Lichtwellenleiter-Kommunikationspfad mit einer ersten Polarisation und die modulierten Signalabschnitte an den mindestens einen Lichtwellenleiter-Kommunikationspfad in einer zweiten Polarisation orthogonal zu der ersten Polarisation zu senden.

6. Sendersystem nach einem der Ansprüche 1 bis 4, bei dem die Sendeeinheit (2) konfiguriert ist, um die Referenzabschnitte an mindestens einen ersten Lichtwellenleiter-Kommunikationspfad zu senden und die modulierten Signalabschnitte an den mindestens einen zweiten Lichtwellenleiter-Kommunikationspfad zu senden, wobei der mindestens eine erste Lichtwellenleiter-Kommunikationspfad sich von dem mindestens zweiten Lichtwellenleiter-Kommunikationspfad unterscheidet.

7. Sendersystem nach einem der Ansprüche 1 bis 4, bei dem die Sendeeinheit (2) konfiguriert ist, um die modulierten Signalabschnitte jedes elektromagnetischen Signalmodus und die jeweiligen Referenzabschnitte durch Freiraumübertragung zu übertragen.

8. Sendersystem nach Anspruch 7, bei dem die Sendungseinheit (2) jeweilige Kollimatoren für die modulierten Signalabschnitte der elektromagnetischen Signalmodi umfasst.

9. Sendersystem nach Anspruch 7 oder Anspruch 8, bei dem die Sendungseinheit (2) konfiguriert ist, um die modulierten Signalabschnitte jedes elektromagnetischen Signalmodus und die jeweiligen Referenzabschnitte mit entsprechenden Verzögerungen zu senden, wobei die Verzögerungen so gewählt sind, dass die Gleichmäßigkeit von Signalsendeinstanzen verbessert wird.

10. Sendersystem nach einem der Ansprüche 1 bis 9, bei dem der Signalgenerator (1) die mindestens zwei elektromagnetischen Modi aus der einzigen Laserquelle unter Verwendung von Modulation erzeugt.

11. Sendersystem nach Anspruch 10, bei dem der Signalgenerator (1) die mindestens zwei elektromagnetischen Modi aus der einzigen Laserquelle (11, 31) unter Verwendung von Phasenmodulation erzeugt.

12. Sendersystem nach einem der Ansprüche 1 bis 9, bei dem die einzige Laserquelle (11, 31) eine Multifrequenz-Laserquelle (31) ist.

13. Kommunikationssystem, umfassend ein Sendersystem nach einem der Ansprüche 1 bis 12 und ein Empfängersystem, das konfiguriert ist, um die modulierten Signalabschnitte jedes elektromagnetischen Signalmodus und separat die jeweiligen Referenzabschnitte zu empfangen und die codierten Daten wiederherzustellen.

14. Verfahren zum Senden von Daten unter Verwendung elektromagnetischer Datensignale, wobei das Verfahren durch ein Sendersystem zum Senden von Daten unter Verwendung elektromagnetischer Datensignale Folgendes umfasst:
(i) Erzeugen von mindestens zwei elektromagnetischen Signalmodi, die unterschiedliche jeweilige Frequenzen aufweisen, aus einer einzigen Laserquelle;
(ii) Aufteilen der elektromagnetischen Signalmodi mit einem Strahlteiler (13), um für jeden der elektromagnetischen Signalmodi einen jeweiligen Signalabschnitt und einen jeweiligen Referenzabschnitt zu erzeugen,
(iii) Codieren von Daten auf die Signalabschnitte durch Modulieren jedes Signalabschnitts unter Verwendung von mindestens einer von Phasen- und Amplitudenmodulation; und
(iv) Senden der modulierten Signalabschnitte jedes elektromagnetischen Signalmodus und getrennt der jeweiligen Referenzabschnitte an ein Empfangssystem entlang eines oder mehrerer Kommunikationspfade,
wobei das Sendersystem ein Multimodus-Signalgenerator für eine Quantenschlüsselverteilung mit kontinuierlichen Variablen ist.

## Revendications

1. Système émetteur destiné à émettre des données à l'aide de signaux de données électromagnétiques, le système émetteur comprenant :
(i) un générateur de signaux électromagnétiques (1) opérationnel pour générer au moins deux modes de signaux électromagnétiques présentant des fréquences respectives différentes,
(ii) un séparateur de faisceaux (13) configuré pour recevoir chacun des modes de signaux électromagnétiques et séparer chacun des modes de signaux électromagnétiques en une partie de signal respective et une partie de référence respective, et
(iii) un codeur (14, 15) configuré pour recevoir la partie de signal respective de chaque mode de signal électromagnétique et pour coder des données sur les parties de signal en modulant chaque partie de signal à l'aide d'une modulation de phase et d'amplitude ; et
(iv) une unité d'émission (2) pour émettre les parties de signal modulées de chaque mode de signal électromagnétique et les parties de référence respectives à un système récepteur le long d'un ou de plusieurs chemins de communication,
et dans lequel le générateur de signaux (1) génère les au moins deux modes électromagnétiques à partir d'une source de laser unique (11,31),
et dans lequel le système émetteur est un générateur de signaux à modes multiples pour une distribution de clés quantiques à variables continues.

2. Système émetteur selon la revendication 1 dans lequel les parties de signal des modes de signaux électromagnétiques générées par le séparateur de faisceaux (13) présentent une intensité de signal égale.

3. Système émetteur selon la revendication 1 ou la revendication 2, dans lequel le codeur (14, 15) applique une modulation de phase aléatoire différente à chaque partie de signal de chaque mode de signal électromagnétique.

4. Système émetteur selon une quelconque revendication précédente, dans lequel le codeur (14, 15) applique une modulation d'amplitude aléatoire différente à chaque partie de signal de chaque mode de signal électromagnétique.

5. Système émetteur selon l'une quelconque des revendications 1 à 4, dans lequel l'unité d'émission (2) est configurée pour émettre les parties de référence à au moins un chemin de communication par fibre optique avec une première polarisation, et les parties de signal modulées à l'au moins un chemin de communication par fibre optique dans une seconde polarisation orthogonale à la première polarisation.

6. Système émetteur selon l'une quelconque des revendications 1 à 4, dans lequel l'unité d'émission (2) est configurée pour émettre les parties de référence à au moins un premier chemin de communication par fibre optique, et les parties de signal modulées à l'au moins un second chemin de communication par fibre optique, l'au moins un premier chemin de communication par fibre optique étant différent de l'au moins second chemin de communication par fibre optique.

7. Système émetteur selon l'une quelconque des revendications 1 à 4, dans lequel l'unité d'émission (2) est configurée pour émettre les parties de signal modulées de chaque mode de signal électromagnétique et les parties de référence respectives par transmission en espace libre.

8. Système émetteur selon la revendication 7, dans lequel l'unité d'émission (2) comprend des collimateurs respectifs pour les parties de signal modulées des modes de signaux électromagnétiques.

9. Système émetteur selon la revendication 7 ou la revendication 8, dans lequel l'unité d'émission (2) est configurée pour émettre les parties de signal modulées de chaque mode de signal électromagnétique et les parties de référence respectives avec des délais correspondants, les délais étant sélectionnés pour améliorer l'uniformité d'instances de transmission de signaux.

10. Système émetteur selon l'une quelconque des revendications 1 à 9, dans lequel le générateur de signaux (1) génère les au moins deux modes électromagnétiques à partir de la source de laser unique à l'aide d'une modulation.

11. Système émetteur selon la revendication 10, dans lequel le générateur de signaux (1) génère les au moins deux modes électromagnétiques à partir de la source de laser unique (11, 31) à l'aide d'une modulation de phase.

12. Système émetteur selon l'une quelconque des revendications 1 à 9, dans lequel la source de laser unique (11,31) est une source de laser à fréquences multiples (31).

13. Système de communication comprenant un système émetteur selon l'une quelconque des revendications 1 à 12 et un système récepteur configuré pour recevoir les parties de signal modulées de chaque mode de signal électromagnétique et recevoir séparément les parties de référence respectives et pour récupérer les données codées.

14. Procédé destiné à émettre des données à l'aide de signaux de données électromagnétiques, le procédé comprenant, par un système émetteur destiné à émettre des données à l'aide de signaux de données électromagnétiques :
(i) la génération, à partir d'une source de laser unique, d'au moins deux modes de signaux électromagnétiques présentant des fréquences respectives différentes ;
(ii) la séparation des modes de signaux électromagnétiques avec un séparateur de faisceaux (13) pour générer, pour chacun des modes de signaux électromagnétiques, une partie de signal respective et une partie de référence respective ;
(iii) le codage de données sur les parties de signal en modulant chaque partie de signal à l'aide d'au moins l'une de la modulation de phase et de la modulation d'amplitude ; et
(iv) l'émission des parties de signal modulées de chaque mode de signal électromagnétique et l'émission séparée des parties de référence respectives, à un système récepteur le long d'un ou de plusieurs chemins de communication,
dans lequel le système émetteur est un générateur de signaux à modes multiples pour une distribution de clés quantiques à variables continues.
